# EUROPEAN PATENT APPLICATION

(11) **EP 0 644 150 A1**
(43) Date of publication of application: **22.03.1995**
(21) Application number: 94306727.2
(22) Date of filing: 14.09.1994
(51) Int. Cl.: B66C 23/20, B23K 37/02, F16M 11/04

(54) **Suspending apparatus**

(30) Priority: 17.09.1993 JP 50707/93
(71) Applicant: Kokuho Company Limited, Yokosuka-city, Kanagawa-prefecture (JP)
(72) Inventor: Akutagawa, Masazumi, c/o Kokuho Company Ltd., Yokosuka-city, Kanagawa-prefecture (JP)
(74) Representative: Jenkins, Peter David

(57) **Abstract**

A suspending apparatus is provided with a swing beam (10) rotatably supported in a horizontal plane, a swing beam driving linkage (20) comprising an oil hydraulic cylinder (22) and links (24,25) for moving the swing beam (10), a slide beam (30) slidably connected to the swing beam (10) for protruding from the free end of the swing beam (10), a slide beam driver (40) for moving the slide beam (30) along the swing beam (10), a motor driven chain block (50) movably mounted on the slide beam (30), a wireless controller (60) and a receiver (70) for actuating the swing beam (10) driving linkage (20), the slide beam driver (40) and the chain block (50) according to remote manipulation by wireless.

## Description

This invention relates to a suspending apparatus used for suspending and carrying objects, or for suspending and moving, for example, a wire feeder of welding equipment at the time of semi-automatic arc welding.

Heretofore, there has been used, for example, a suspending apparatus provided with a swing beam disposed rotatably on a wall of a workshop house in a horizontal plane and a chain block mounted on the swing beam movably along the swing beam. In a case of carrying out semi-automatic arc welding by using the suspending apparatus, a wire feeder of welding equipment is hung from the chain block of the apparatus and welding work is performed as the wire feeder is moved according to the progression of the welding after shifting the wire feeder together with the chain block from a welding source disposed in the vicinity of a wall of the workshop house. Namely, the welding work is carried out as the wire feeder is moved together with the chain block within the rotatable range of the swing beam.

In the above-mentioned conventional suspending apparatus, the movable area of the chain block is not so wide and a large force is required to rotate the swing beam and to move the chain block when the wire feeder is weighty. Accordingly, there has been a proposal to widen the movable area of the chain block by connecting a slide beam to the swing beam slidably in a longitudinal direction so as to extrude from the top end of the swing beam and to facilitate the rotation of the swing beam by disposing an electric motor for driving the swing beam in, for example, U.S. Patent No. 5,232,192.

In the case of disposing the slide beam and the electric motor for driving the swing beam, however, there is the possibility that an operator is in danger at the time of rotational operation in the vicinity of the suspending apparatus. In addition to the above, there is a problem in that it is feared that the driving motor and the transmission system are damaged since considerable torque is applied to the driving motor and the transmission system for driving the swing beam at the time of, especially starting and stopping the rotation of the swing beam.

This invention is made to solve the aforementioned problems of the prior art, and it is an aim to provide a suspending apparatus which ensures the safety of the operator at the same time as realizing a laborsaving, moves the hoisting means such as the chain block in a wide range, and drives the swing beam without hindrance even if a considerable torque is applied on the driving source and the transmission system of the swing beam.

The present invention provides a suspending apparatus comprising a swing beam rotatably mounted on a support in a horizontal plane, a swing beam driving means disposed between the swing beam and the support for moving the swing beam swingingly, a slide beam slidably connected to the swing beam for moving in a longitudinal direction of the swing beam, a slide beam driving means for moving the slide beam along the swing beam, a motor driven hoisting means movably mounted on the slide beam in a longitudinal direction of the slide beam for hoisting or lowering an object, a wireless controller for transmitting control signals to control the swing beam driving means, the slide beam driving means and the motor driven hoisting means by wireless, and a receiver for receiving the control signals transmitted from the wireless controller and for putting the swing beam driving means, the slide beam driving means and the hoisting means in or out of operation in response to the control signals.

In a preferred embodiment of the suspending apparatus according to this invention, the swing beam driving means is constituted from linkage consisting of an oil hydraulic cylinder disposed on the swing beam, a first link rotatably connected to the swing beam at one end thereof, a second link rotatably connected to a top end of a cylinder rod of the oil hydraulic cylinder at one end thereof and rotatably connected to another end of the first link at a middle part thereof, and an eye plate secured to a base fixed on the support and rotatably connected to another end of the second link.

In another preferred embodiment of the suspending apparatus according to this invention, the apparatus is further provided with flexible containers to be contained with power cables and flexible tubes such as a hose between the swing beam and the slide beam, and between the slide beam and the hoisting means.

In the suspending apparatus according to this invention, the swing beam is disposed with a slide beam slidable therealong, therefore the movable area of the hoisting means becomes wider by extruding the slide beam from the free end of the swing arm.

Because the swing beam, the slide beam and the hoisting means are controlled through the remote manipulation by wireless, safety of the operator is improved and laborsaving is accomplished.

Furthermore, when the swing beam is driven by the linkage consisting of the oil hydraulic cylinder, the first and the second links, the linkage is never damaged even if considerable torque is applied thereon and the swing beam rotates smoothly always independently of dimensions of the torque.

An embodiment of the present invention will be described hereinbelow by way of example only with reference to the accompanying drawings, in which:
FIG.1 is a perspective view illustrating an embodiment of the suspending apparatus according to this invention;
FIG.2 is a side view of the suspending apparatus shown in FIG.1;
FIG.3 is a side view illustrating a state where the slide beam is extruded from the swing beam of the suspending apparatus shown in FIG.1;
FIG.4 is a top view of the suspending apparatus shown in FIG.3;
FIG.5 is an enlarged front view of the suspending apparatus shown in FIG.1;
FIG.6 is an enlarged side view illustrating in detail the linkage for driving the swing beam of the suspending apparatus shown in FIG.1;
FIG.7 is a top view of the linkage shown in FIG.6;
FIG.8 is a top view illustrating driving action of the linkage shown in FIGS.6 and 7;
FIG.9A is an enlarged sectional view along sectional lines 9A-9A of FIG.4; and
FIG.9B is an enlarged sectional view along sectional lines 9B-9B of FIG.4.

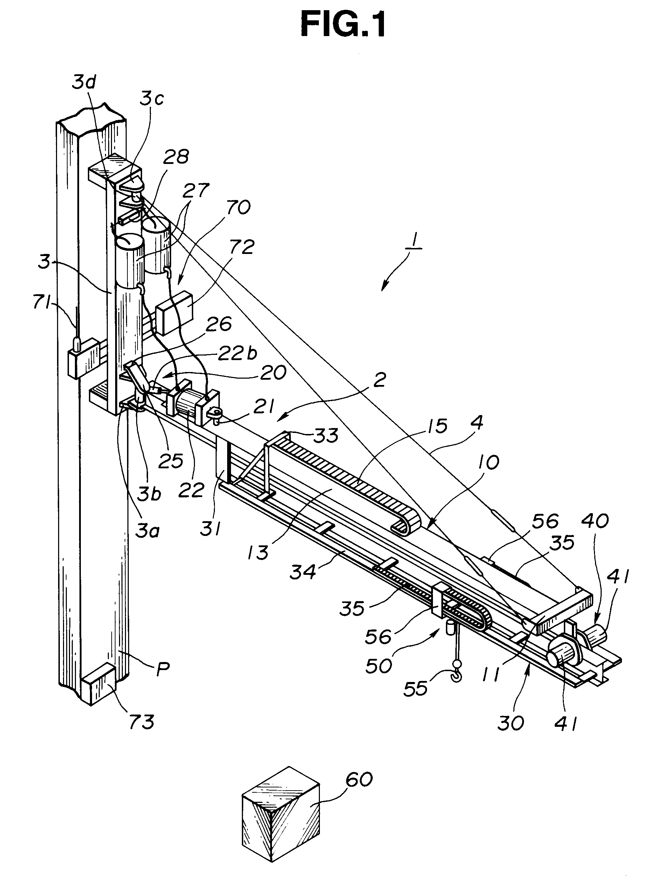

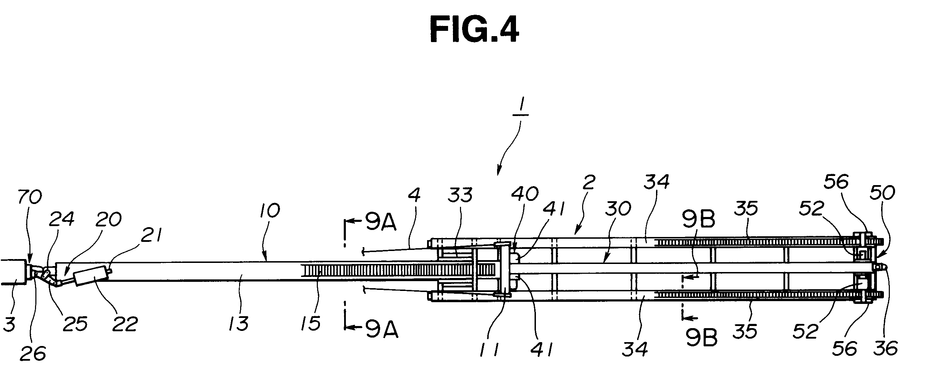

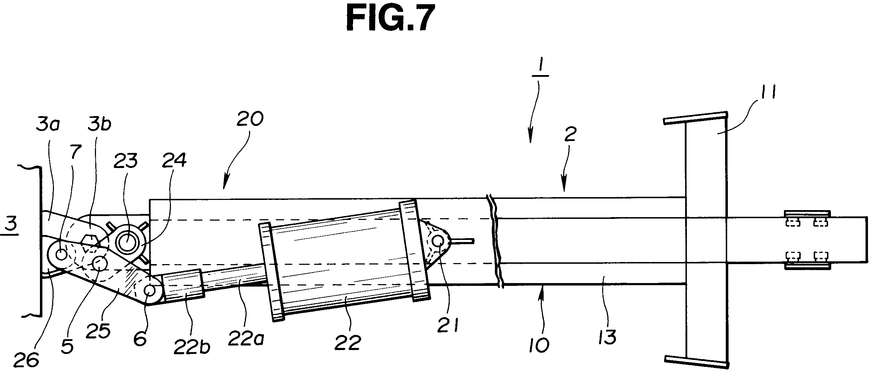

An embodiment of the suspending apparatus according to this invention is shown in FIG.1 to FIG.9.

As shown in FIG.1, a suspending apparatus 1 is provided with an apparatus body 2 having a swing beam 10 rotatably mounted on a support P in a horizontal plane, a swing beam driving linkage 20, as a swing beam driving means, disposed between the support P and the swing beam 10 for moving the swing beam 10, a slide beam 30 slidably connected to the swing beam 10 in a longitudinal direction of the swing beam 10 so as to extrude from the free end (right end in FIG.1) of the swing beam 10, a slide beam driver 40 (slid beam driving means), and a motor driven chain block 50 (motor driven hoisting means) movably mounted on the slide beam 30 in longitudinal direction of the slide beam 30, and further provided with a wireless controller 60 for transmitting control signals and a receiver 70 disposed on the apparatus body 2 for receiving the control signals transmitting from the controller 60 and putting the swing beam driving linkage 20, the slide beam driver 40 and the motor driven chain block 50 in or out of operation in response to the control signals.

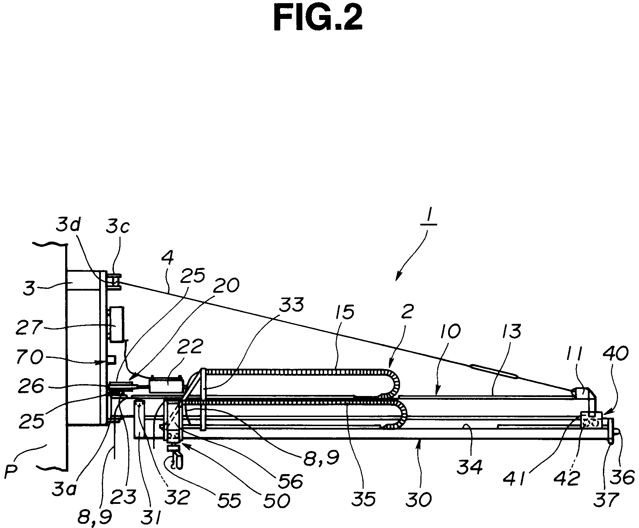

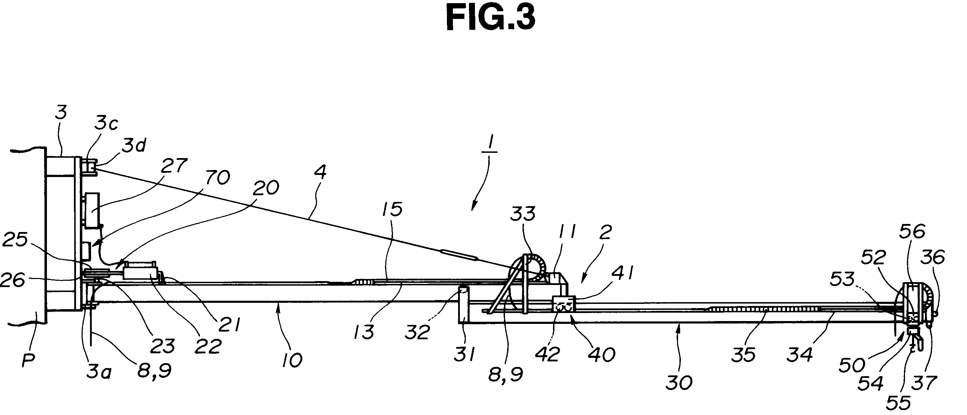

The swing beam 10 of the apparatus body 2 is made of I section steel, and connected to a lower bracket 3a of a base 3 fixed on the support P through a vertical pin 3b at the base end (left end in FIG.1) thereof, as also shown in FIGS.2 and 3. A square bar 11 is disposed on the top end of the swing beam 10, and the swing beam 10 is so designed as to be kept always horizontally by connecting between the bar 11 and a rotation pin 3d disposed on an upper bracket 3c of the base 3 through wires 4 having turn backles.

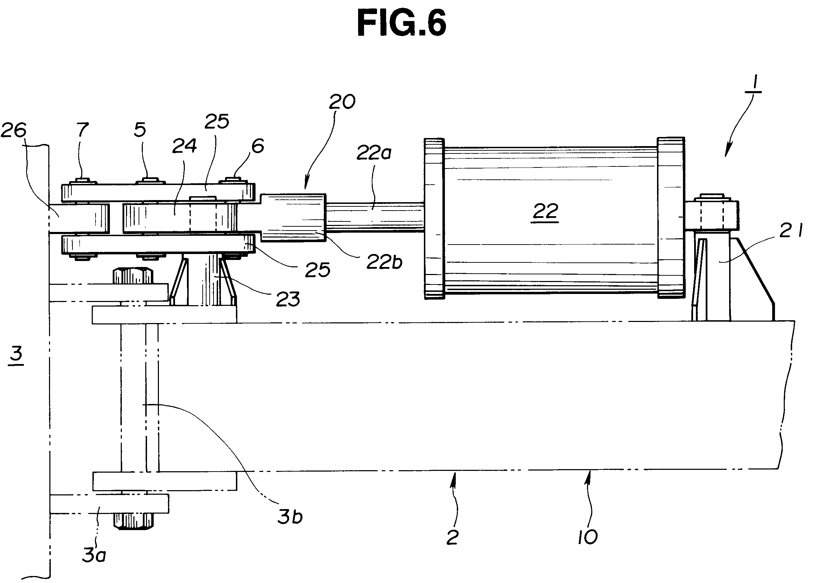

The linkage 20 for driving rotationally the swing beam 20 is constructed mainly from an oil hydraulic cylinder 22 connected pivotally to a stand pin 21 secured on the swing beam 10 at the base end of the cylinder 22, a first link 24 connected pivotally to a link pin 23 secured on the swing beam 10 at one end of the first link 24, two second links 25 connected rotatably to another end of the first link 24 through a pin 5 at the middle parts of the second link 25 and connected rotatably to a member 22b fitted on the free end of a cylinder rod 22a of the oil hydraulic cylinder 22 through a pin 6 at one end of the second link 25, and an eye plate 26 fixed on the base 3 and connected rotatably to another end of the second link 25, as shown in FIGS.6 to 8 after magnification, the stand pin 21 and the link pin 23 are disposed on the center line of the swing beam 10 so as to lie on one straight line passing the vertical pin 3b supporting the swing beam 10.

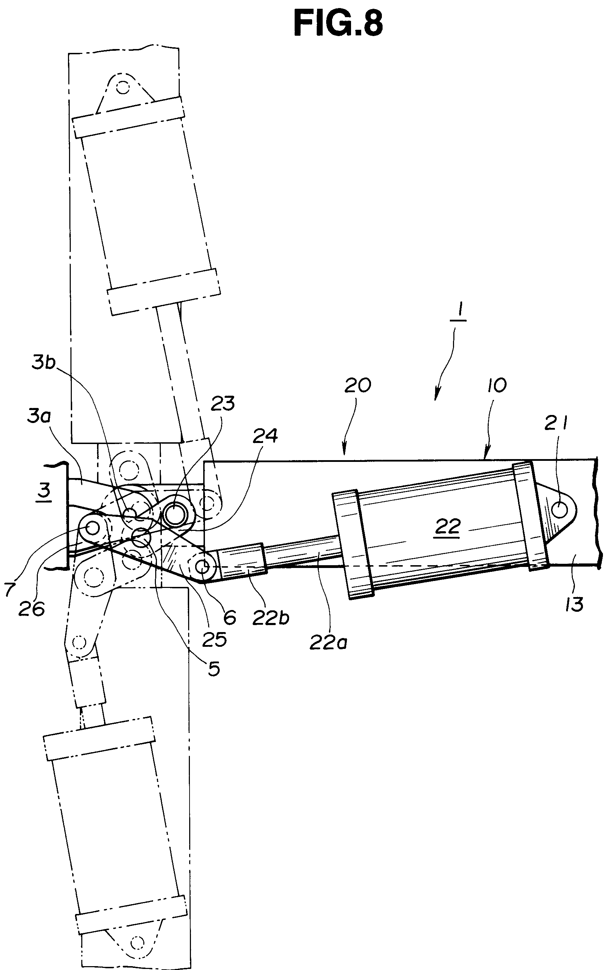

In the swing beam driving linkage 20, the eye plate 26 is fixed on the base 3 at position shifted from the center line connecting the stand pin 21 and the vertical pin 3b in a state where the swing beam 10 meets at right angles with a front face of the support P as shown in FIGS.1 to 7, so that the swing beam 10 is possible to rotate from a position shown with one dot chain lines to a position shown with two dot chain lines shown in FIG.8 by actuating the oil hydraulic cylinder 22. Namely, the swing beam 10 is so structured as to be halted at a desired point by controlling oil supplied to the oil hydraulic cylinder 22 from two oil tanks 27 provided at the upper position of the base 3 through an air control valve 28 disposed at the upper position of the base 3.

The slide beam 30 of the apparatus body 2 is made of I section steel similarly to the swing beam 10, and provided with plates 31 projecting upwardly on the both sides of the base end thereof as shown FIG.2 and 3. The plates 31 are provided with rollers 32 oppositely with each other, and the slide beam 30 is slidably supported by the swing beam 10 in a longitudinal direction of the swing beam 10 by contacting the respective rollers 32 upwardly to an upper flange of the swing beam 10 on the both sides and engaging the slide beam driver 40 disposed at the free end of the swing beam 10 with an upper flange of the slide beam 30.

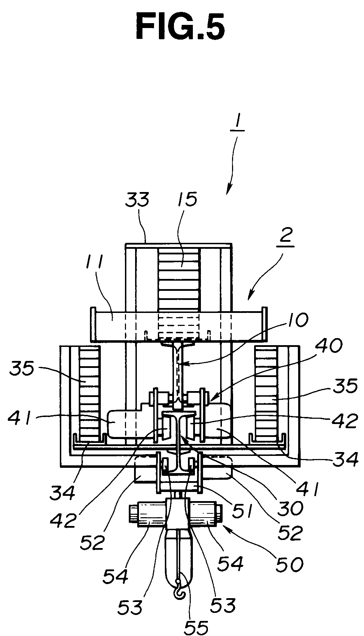

The slide beam driver 40 is provided with motor driven trolleys 41, 41 fixed on the both sides of the free end of the swing beam 10 and driving rollers 42, 42 fitted on respective output shafts of the trolleys 41, 41 opposed with each other as also shown in FIG.5, and so designed as to move slidingly the slide beam 30 by contacting the rollers 42, 42 on the both sides of the upper flange of the slide beam 30 from the lower side and transmitting output power from the trolleys 41, 41 to the slide beam 30.

In this case, electric power is supplied to both the moter driven trolleys 41, 41 through power cables (not shown) disposed along the swing beam 10.

The motor driven chain block 50 is provided with a base plate 51, electric motors 52, 52 fixed on the both sides of the base plate 51 respectively, rollers 53, 53 fitted on respective output shaft of the motors 52, 52 opposite with each other, a hoist motor 54 hung from the base plate 51, and a hook 55 to be driven up and down according to the operation of the hoist motor 54, and is so structured as to run along the slide beam 30 according to the output power of the motors 52, 52 and as to shift the hook 55 together with the hoist motor 54 by contacting the rollers 53, 53 to a lower flange of the sliding beam 30 from the upper side on the both sides of the lower flange.

In this embodiment, the apparatus body 2 is provided with a first flexible container 15 formed by joining numerous frames between the swing beam 10 and the slide beam 30 and second flexible containers 35, 35 formed similarly to the first flexible container 15 between the slide beam 30 and the chain block 50.

The first flexible container 15 is secured to the middle of a flat bar 13 disposed on the upper flange of the swing beam 10 at one end thereof, and secured to a stand 33 disposed on the base end of the slide beam 30 at another end thereof.

Each of the second flexible containers 35, 35 is secured to the middle of one of flat bars 34, 34 disposed in the longitudinal direction on the both sides of the slide beam 30 at one end thereof, and secured to one of stnads 56, 56 disposed on the chain block 50 at another end thereof.

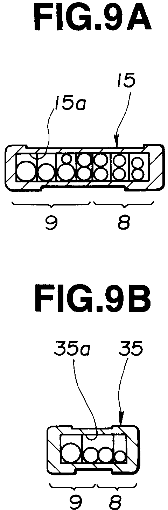

The first and the second flexible containers 15 and 35 are provided with hollows 15a and 35a, respectively as shown in FIGS.9A and 9B.

In a case of suspending a wire feeder of a semi-automatic arc welding machine (not shown) from the hook 55 of the motor driven chain block 50, power cables 8 and hoses 9 (flexible tubes) are contained in the hollow 15a of the first flexible container 15. The base ends of the power cables 8 and the hoses 9 are connected to a power source, gas bombs and an air compressor (not shown) respectively, electric power is supplied to the electric motors 52 and the hoist motor 54 of the chain block 50, a circling light 36 and a power supply indication light 37 disposed to the top end of the slide beam 30, and the wire feeder (not shown) suspended from the hook 55 through the power cables 8, and gas is supplied to the wire feeder through the hoses 9. The power cables 8 and the hoses 9 are secured on the flat bar 13 in a range between the base end and the middle part of the swing beam 10 (not shown in FIG.1).

The top ends of power cables 8 and hoses 9 bifurcated at the stand 33 are contained in the hollow 35a of the second flexible container 35, and secured on the flat bars 34, 34 respectively in a range between the base end and the middle part of the slide beam 30 (not shown in FIG.1).

The receiver 70 comprises an antenna 71 and a receiver body 72, which are disposed on the base 3 of the apparatus body 2. In this embodiment, a switch box 73 is provided on the lower side of the support P for switching over the remote manipulation by the wireless controller 60 to manual operation.

In a case of carrying out welding using the wire feeder suspended from the hook 55 of the chain block 50 of the suspending apparatus 1, first of all, an operation signal is transmitted to the swing beam driving linkage 20 by operating the wireless controller 60 at a position distant from the apparatus body 2.

On the side of the receiver 70, the operation signal is received by the antenna 71 and a control signal is sent to the air control valve 28 from the receiver body 72. Therefore, the oil hydraulic cylinder 22 is supplied with oil from the oil tanks 27, 27 according to the opening and closing action of the air control valve 28, thereby turning the swing beam 10 in the desired direction.

In this time, since the swing beam 10 is driven by the swing beam driving linkage 20, the oil hydraulic cylinder 22 of the linkage 20 is not damaged even if heavy torque is applied at the time of starting and stopping the rotation of the swing beam 10, and the swing beam 10 rotates smoothly always independently of dimensions of the torque.

Subsequently, by operating the wireless controller 60, the slide beam 30 is extruded from the swing beam 10 as much as proper amount according to the actuation of the trolleys 41, 41 of the slide beam driver 40, and the chain block 50 is shifted to a proper point on the slide beam 30 according to the actuation of the motors 52, 52 thereof.

Next, the welding work is carried out after ajusting the height of the wire feeder of the semi-automatic arc welding machine suspended from the hook 55 adequately according to the actuation of the hoisting motor 54 of the motor driven chain block 50.

Accordingly, in the suspending apparatus 1, the movable range of the chain block 50 becomes wider corresponding to the length of the slide beam 30 extruded from the free end of the swing beam 10, and the safety of the operator and the laborsaving are established since the swing beam 10, the slide beam 30 and the chain block 50 is entirely operated by the remote manipulation.

Additionally, the power cables 8 and the hoses 9 are contained in the hollows 15a and 35a of the flexible containers 15 and 35 in this embodiment, so that the power cables 8 and the hoses 9 do not dangle and it is possible to prevent accidents such that the worker falls down by the power cables 8 or the hoses 9 coiled round the worker's feet. Furthermore, the slide beam 30 and the motor driven chain block 50 are actuated smoothly because the containers 15 and 35 are flexible and crooked in accordance with the movement of the slide beam 30 and the chain block 50.

The detailed structure of the suspending apparatus according to this invention is not limited in the above-mentioned embodiment, it is possible to dispose a fixed chain block at the base end of the slide beam 30 and possible to equip a display board indicating operational directions.

Although an example of the suspending apparatus used for suspending the wire feeder of the semi-automatic arc welding equipment is shown in this embodiment, this invention is not limited to use in merely welding and it is possible to use the suspending apparatus according to this invention for transportation of objects such as machines, products and so on, for example.

As mentioned above, in the suspending apparatus according to this invention having aforementioned construction, excellent effects can be obtained in that it is possible to move the hoisting means over a wide range, possible to improve the safety of the operator and to realize a saving in labor since the swing beam, the slide beam and the hoisting means are controlled by remote manipulation, and possible to turn the swing beam very smoothly always regardless of dimensions of the torque applied.

## Claims

1. A suspending apparatus comprising:
a swing beam rotatably mounted on a support in a horizontal plane;
a swing beam driving means disposed between the swing beam and the support for moving said swing beam swingingly;
a slide beam slidably connected to said swing beam for moving in a longitudinal direction of the swing beam;
a slide beam driving means for moving said slide beam along the swing beam;
a motor driven hoisting means movably mounted on the slide beam in a longitudinal direction of said slide beam for hoisting or lowering an object;
a wireless controller for transmitting control signals to control the swing beam driving means, the slide beam driving means and the motor driven hoisting means by wireless; and
a receiver for receiving the control signals transmitted from said wireless controller and for putting said swing beam driving means, said slide beam driving means and said hoisting means in or out of operation in response to said control signals.

2. A suspending apparatus as set forth in claim 1, wherein said swing beam driving means consists of an oil hydraulic cylinder disposed on the swing beam, a first link rotatably connected to said swing beam at one end thereof, a second link rotatably connected to a top end of a cylinder rod of said oil hydraulic cylinder at one end thereof and rotatably connected to another end of said first link at a middle part thereof, and an eye plate secured to a base fixed on the support and rotatably connected to another end of said second link.

3. A suspending apparatus as set forth in claim 1, wherein said apparatus is further provided with flexible containers to be contained with power cables and flexible tubes such as a hose between said swing beam and said slide beam, and between said slide beam and said hoisting means.
